# EUROPEAN PATENT SPECIFICATION

(11) **EP 2 259 537 B1**
(45) Date of publication and mention of the grant of the patent: **28.08.2013**
(21) Application number: 10171119.0
(22) Date of filing: 24.12.2008
(51) Int. Cl.: H04L 29/06, H04L 29/08

(54) **Method for transmitting and receiving notification message and apparatus thereof**
Verfahren zum Senden und Empfangen einer Mitteilungsbenachrichtigung und Vorrichtung dafür
Procédé de transmission et de réception de message de notification et appareil correspondant

(30) Priority: 28.12.2007 US 17176 P; 23.12.2008 KR 20080132234
(43) Date of publication of application: 08.12.2010
(62) Divisional of application: 08172936.0
(73) Proprietor: LG Electronics Inc., Seoul 150-721 (KR)
(72) Inventor: Moon, Kyoung Soo, 137-724, SEOUL (KR); Choi, Jin Young, 137-724, SEOUL (KR)
(74) Representative: Cabinet Plasseraud

(56) References cited:
- US-A1- 2007 086 465
- "Digital Video Broadcasting (DVB); IP Datacast over DVB-H: Content Delivery Protocols" 20061201; 20061200, vol. 1.2.1, 1 December 2006 (2006-12-01), XP014036263

## Description

The present invention relates to a notification message transmitting/receiving method and a notification message transmitting/receiving apparatus in a broadcasting and communication system.

In broadcasting and communication fields, the term "content(s)" represents contents or information including an image, sound, and text delivered to the user over wired/wireless broadcasting and communication networks. In accordance with recent techniques, digital contents are provided various broadcast channels and interactive channels. For example, the user may download already-broadcasted contents, to view the contents. In accordance with the recent incorporation of a broadcasting system and a communication system, the same contents could be provided from either the broadcasting system or the communication system. For example, a digital video broadcasting (DVB) system has been proposed. The DVB system is a system in which a digital broadcasting system based on a moving picture experts group-2 (MPEG-2) system is incorporated with an internet protocol (IP)-based communication system. Using the DVB system, it is possible to access desired contents over either a broadcast channel or a communication channel, and thus to purchase the contents or to acquire all service information associated with the contents.

A server providing services associated with contents informs the user of an unexpected situation or a change of service details, over broadcasting and communication networks, using a message. Hereinafter, such a message notifying the above-mentioned information will be referred to as a "notification message". Here, "notitication" means the transmission of the notification message itself.

Document US2007/086465 relates to providing notification in a service guide of events or changes in events in communications networks. It relates specifically to notifying a user or group of users of upcoming events, changes in currently provided events, or on-going or updated information.

Document "Digital Video Broadcasting (DVB); IP Datacast over DVB-H: Content Delivery Protocols" 20061201 ; 20061200, vol. 1.2.1, 1 December 2006 (2006-12-01), relates to delivery protocols for digital video broadcasting on communications networks.

Accordingly, the present invention is directed to a method for receiving a notification message that substantially obviates one or more problems due to limitations and disadvantages of the related art.

An object of the present invention is to provide a notification message receiving method and a notification message receiving apparatus which are capable of efficiently delivering a notification message. An object of the present invention is to provide a notification message receiving method and a notification message receiving apparatus which are capable of receiving description information describing each of notification messages when the plurality of notification messages is transmitted.

Another object of the present invention is to provide a notification message receiving method and a notification message receiving apparatus which are capable of easily announcing a notification message to a receiver.

Another object of the present invention is to provide a notification message receiving method and a notification message receiving apparatus which are capable of providing a notification message at an appropriate time without an increase in transmission bandwidth.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

In one embodiment, the invention relates to a notification message receiving apparatus according to claim 1.

In an example useful for understanding the invention, the notification message receiving apparatus further comprises a transport stream demultiplexer configured to demultiplex a broadcast signal carrying service description information over the network and a service description information decoder configured to decode the service description information demultiplexed by the transport stream demultiplexer and to decode network default notification (NDN) message announcement information from a network information table (NIT) included in the service description information.

In one embodiment, the service guide information controller is configure to provides a service guide default notification message parsed by the second notification parser.

The invention also relates to a notification message receiving method according to claim 7.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram illustrating a protocol stack capable of transmitting and receiving a notification message;

FIG. 2 is a diagram illustrating a notification framework for transmitting and receiving a notification message;

FIG. 3 is a diagram illustrating a route on which a notification message delivered over a broadcasting network may be discovered;

FIG. 4 is a diagram illustrating a descriptor capable of accessing a default notification service;

FIG. 5 is a diagram illustrating a network information table (NIT) included in service description information;

FIG. 6 is a diagram illustrating a descriptor describing network default notification (NDN) entry information;

FIG. 7 is an embodiment in which a notification message is mapped on a file delivery over unidirectional transport (FLUTE);

FIG. 8 is a diagram illustrating an embodiment in which a plurality of notification messages are mapped on an FLUTE;

FIG. 9 is a diagram illustrating an embodiment in which a notification message is mapped on an RTP or on an RTP and an FLUTE;

FIG. 10 is a diagram illustrating an embodiment in which a plurality of notification messages are delivered;

FIG. 11 illustrates an example of an RTP payload format (PF) header;

FIG. 12 is a diagram illustrating identifier information representing that a plurality of notification messages is carried in an RTP payload;

FIG. 13 is a diagram illustrating an identifier representing that the RTP payload carries a plurality of notification messages;

FIG. 14 is a diagram illustrating a life cycle of a notification object;

FIG. 15 is a diagram illustrating an example in which a notification message is transmitted;

FIG. 16 is a diagram illustrating a state of a notification according to an action;

FIG. 17 is a diagram illustrating an example in which a notification message is described using an FLUTE;

FIG. 18 is a diagram illustrating "NotificationAggregateDescriptionType" describing a notification message including a plurality of actions and time information thereof;

FIG. 19 is a diagram illustrating an RTP PF header;

FIG. 20 is a diagram illustrating an RTP payload extension header

FIG. 21 is a flowchart illustrating an embodiment of a notification message transmitting/receiving method; and

FIG. 22 is a block diagram illustrating an embodiment of a notification message receiving apparatus.

Reference will now be made in detail to the preferred embodiments of the present invention, examples of which are illustrated in the accompanying drawings. Wherever possible, the same reference numbers will be used throughout the drawings to refer to the same or like parts.

A notification message may be delivered to a receiver over a broadcasting network. When the receiver can communicate with an interaction network, the notification message may be delivered to the receiver over the interaction network. The notification message delivered to the receiver over the broadcasting network may be complemented through the interaction network.

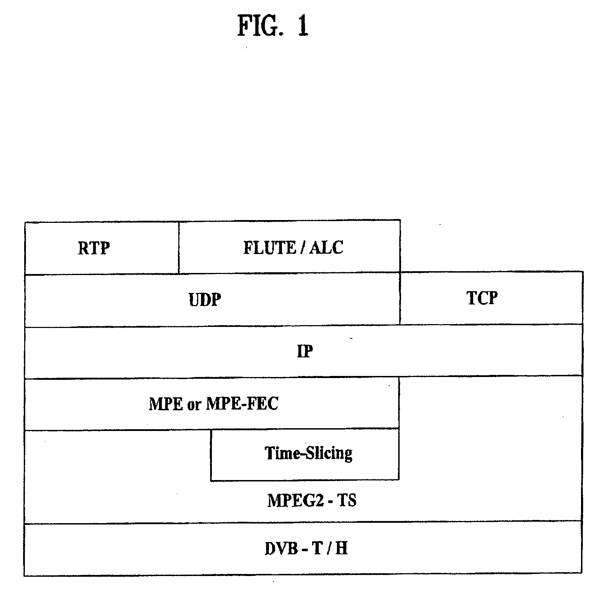

FIG. 1 is a diagram illustrating a protocol stack capable of transmitting and receiving a notification message. This drawing illustrates a digital video broadcasting (DVB) system as a broadcasting system capable of transmitting and receiving a notification message.

On a protocol defining a digital video broadcasting-terrestrial/handheld (DVB-T/H) system, a protocol defining a moving picture experts group-2 transport stream (MPEG-2 TS) may be arranged. The MPEG-2 TS may include data according to a time-slicing scheme or data encapsulated in a multiprotocol encapsulation (MPE) scheme or a multiprotocol encapsulation-forward error correction (MPE-FEC) scheme.

An Internet protocol (IP) may be arranged on the MPEG-2 TS protocol. A transmission control protocol (TCP) or user datagram protocol (UDP) may be arranged on the IP protocol. A real-time protocol (RTP) or a file delivery over unidirectional transport (FLUTE)/asynchronous layered coding (ALC) protocol may be arranged on the UDP.

A notification message may be classified in accordance with an access method, as follows.

That is, the notification message may be classified into a message according to a default notification and a message according to a user-selected notification.

The default notification represents the case in which a notification message is delivered irrespective of whether there is a user's selection.

The default notification message is delivered to the user even when the user does not subscribe to an associated service. For reference, if the service is provided via a interactive network there may be the case in which, even in the default notification, the user can receive a notification message only when he subscribes to the associated service.

The default notification may include a network default notification (NDN), a platform default notification (PDN), and an electronic service guide (ESG) default notification (EDN).

The NDN represents a notification deliverable at a network level of a broadcasting or communication system. The NDN may be delivered using a network-level signaling (for example, a DVB-SI signaling) and/or an IP-based session. The NDN is related to a message associated with an emergency such as an urgent notice, broadcasting shut-down, and network variation.

The PDN is used to deliver a message associated with a specific IP platform. For example, the PDN may represent a notification message associated with a variation in platform format.

The EDN represents a notification associated with services described in an electronic service guide (ESG). The EDN may be delivered over an ESG carousel or ESG dedicated channel. For example, the EDN message may be associated with an ESG provider or services described in an ESG.

The user-selected notification represents a notification deliverable to the user when he subscribes to an associated service. The user-selected notification may include messages associated with services that may be discovered in an ESG. The user-selected notification can be provided under the condition in which the user selects the associated service and notification component.

The user-selected notification includes a service related notification. The service related notification is a notification related to specific services described in an ESG. When the service related notification is delivered using a part of a service session, it may be referred to as an inband service related notification message (iSRN).

On the other hand, when the service related notification is delivered using an ESG dedicated network session, the delivery thereof may be achieved using an EDN session without a selection of a specific service. In this case, the service related notification may be referred to as an out-of-band service related notification message (oSRN).

The SRN requires a subscription to the associated service. In the case of the iSRN, the associated service is provided in accordance with accurate synchronization thereof with a media component of the service session, when the iSRN is transmitted via RTP. On the other hand, in the case of the oSRN, the associated service is provided without synchronization thereof with a media component because the oSRN is delivered using an EDN session.

Meanwhile, the notification service is a service associated with the delivery of a notification message described in an ESG. The notification service represents a service that may be described in an ESG in accordance with a service subscription of the user, for example, a news service.

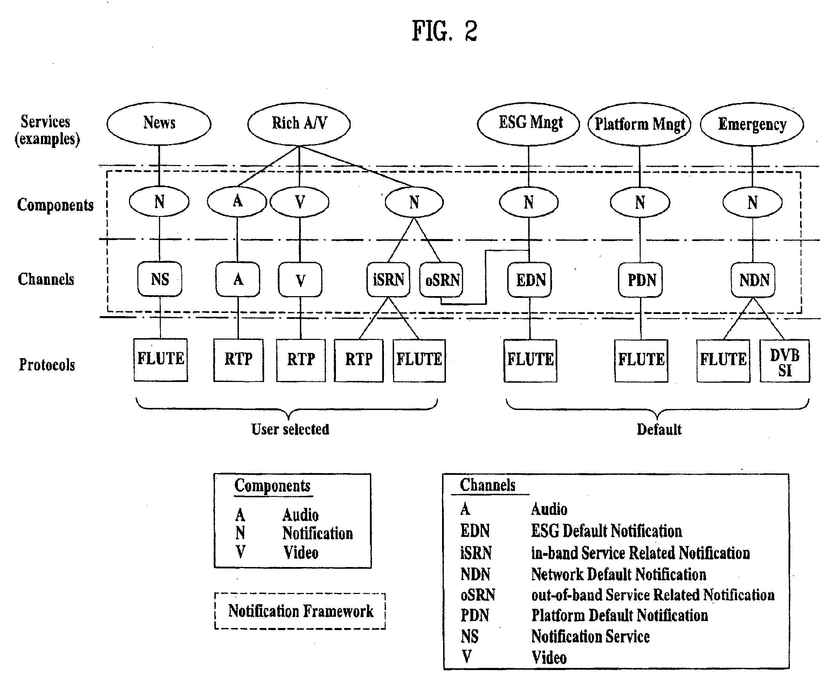

FIG. 2 illustrates a notification framework for transmitting and receiving a notification message.

The illustrated framework includes, for example, a service level, a component level, a channel level, and a protocol level. Services of the service level may be divided into user-selected services news and A/V-included services (rich A/V), and default services including ESG management service information, platform management service information, and emergency messages.

In the component level, "A" represents an audio component, "V" a video component, and "N" a notification component. The channel level includes channels for delivering respective components. These channels are designated by "A", "V", "EDN", "iSRN", "NDN", "oSRN", "PDN, and "NS", respectively, and the meanings thereof are described in the lower portion of FIG. 2.

News may be delivered in an FLUTE format over a notification service (NS) channel. Audio and video of Rich A/V service may be delivered by RTP through A/V channels, and N (notification component) may be delivered by FLUTE or RTP format over oSRN and iSRN channels.

ESG management information may be delivered in an FLUTE format over an EDN channel. Platform management information may be delivered in an FLUTE format over a PDN channel. An emergency message may be delivered in an FLUTE or broadcasting service description information format over an NDN. A DVB SI is illustrated as an example of the service description information.

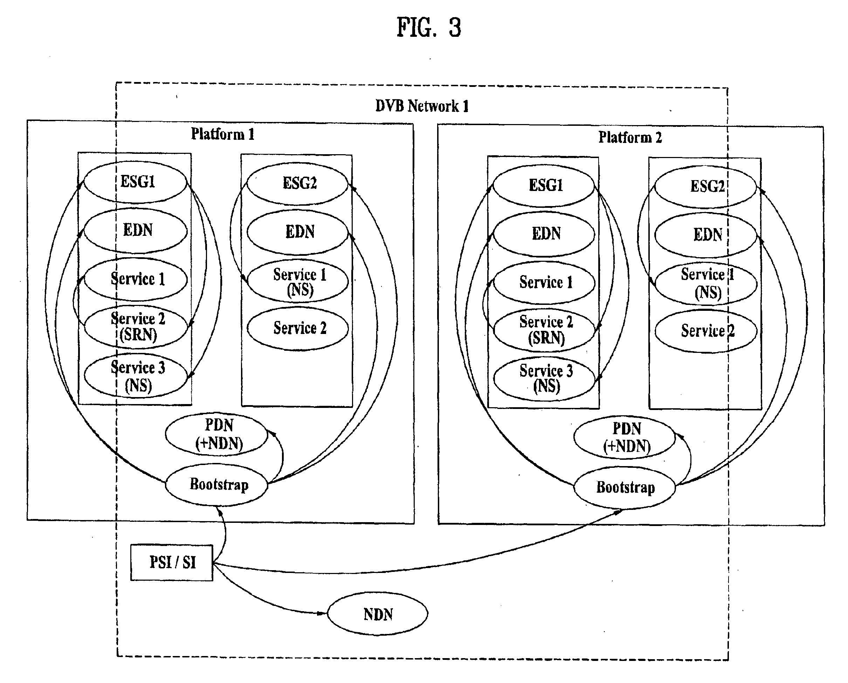

FIG. 3 illustrates a route on which a notification message delivered over a broadcasting network may be discovered. For example, it is assumed that a DVB network 1 includes a platform-1 and a platform-2. Each of the platform-1 and platform-2 may be, for example, an IP platform.

A message according to a network default notification may be carried in service description information of a DVB network, for example, program specification information/service information (PSI/SI).

For example, a default network channel may be discovered from a bootstrap channel used to discover an ESG. The service description information may include bootstrap information for a service access. The bootstrap information of each platform may carry a platform default notification (PDN) message. That is, the bootstrap of each platform may announce a PDN. The PDN may also carry an NDN message.

The bootstrap information may announce an ESG or EDN to a receiver. For example, an ESG-1 may announce a service-2 (SRN) carrying a service related notification. The ESG-1 may also announce a service-3 providing an NS carrying a notification service. The bootstrap information may also announce an EDN. An ESG-2 may announce a service-1 carrying an NS.

Thus, the receiver can discover a default notification channel from a bootstrap channel, from which an ESG can also be discovered. A notification channel delivering a service related message described in an ESG may be discovered from the ESG, similarly to channels related to services described in the ESG.

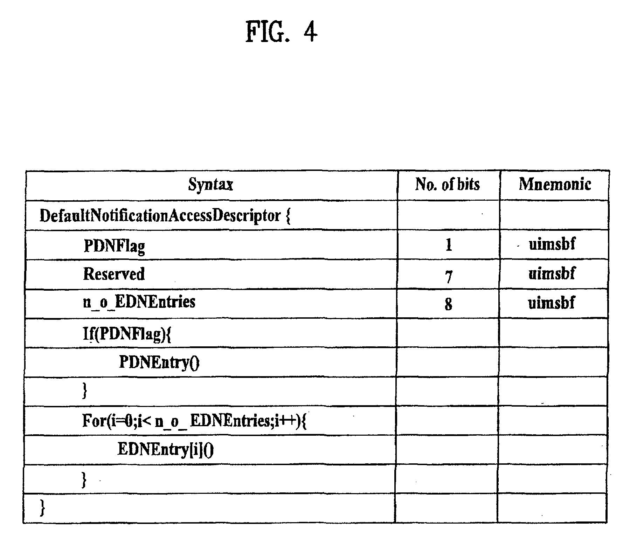

FIG. 4 illustrates a descriptor capable of accessing a default notification service. In this drawing, the illustrated descriptor is represented by "DefaultNotificaitonAccessDescriptor". One PDN service and at least one EDN service may be delivered over the same IP platform. Bootstrap information, which can announce an ESG to a receiver, may provide PDN and EDN entry information, through the above-stated descriptor. That is, the descriptor illustrated in the drawing may include PDN acquisition information associated with the current IP platform or EDN acquisition information associated with information "ESGProviderID" about an identifier of a specific ESG provider indicated in a descriptor "ESGProviderDiscovery", from which the ESG provider can be discovered.

In detail, a "PDNFlag" field indicates whether there is a PDN. An "n_o_EDNEntris" field indicates the number of EDN fields.

PDNEntry() may describe PDN entry information according to the value of the "PDNFlag" field. EDNEntry() may describe EDN entry information according to the value of the "n_o_EDNEntris" field.

Meanwhile, NDN entry information cannot be delivered using the descriptor illustrated in FIG. 4, different from the case of FIG. 3. Hereinafter, an embodiment, in which NDN entry information is provided, will be described.

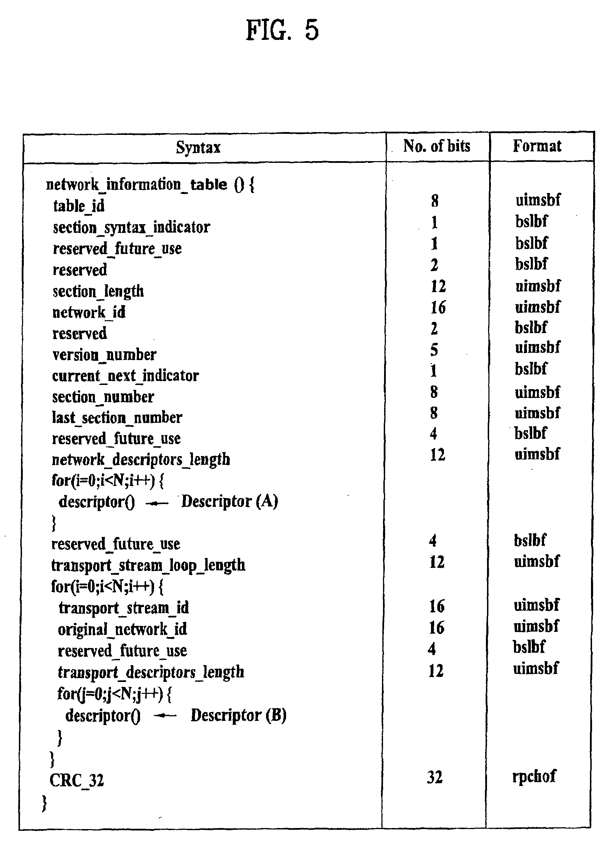

FIG. 5 is a diagram illustrating a network information table (NIT) as an example of service description information. NDN entry information may be included in the NIT. Hereinafter, the NIT will be described.

A "table_id" field indicates an identifier identifying the NIT. A "section_syntax_indicator" field may be set to "1". This field may have an MPEG long-form format. A "reserved_future_use" field and a "reserved" field, which are undesignated fields, may be set to, for example, "1" and "11", respectively. A "section_length" field indicates the length of a session that is an NIT delivery unit.

A "network_id" field indicates an identifier identifying a delivery system which delivers transport streams of an associated service. For example, the "network_id" field may include identification information of a broadcast transmitter. A "version_number" field indicates a version number of a section or sub-table. A "current_next_indicator" field indicates whether information following the "current_next_indicator" field is applied to the current section. A "section_number" field indicates a section serial number. A "last_section_number" field indicates the number of a last section.

A "reserved_future_use" field indicates an undesignated field. A "network_descriptors_length" field indicates the length of descriptors following the "network_descriptors_length" field. The descriptors may include a descriptor A having information making it possible to describe an associated network.

A "transport_stream_loop_length" field following the undesignated field, namely, the "reserved_future_use" field, indicates the length of a transport stream loop following the "transport_stream_loop length" field.

A "transport_stream_id" field indicates a transport stream identifier identifying a transport stream delivered by a delivery system, which delivers a current broadcast signal, to distinguish the transport stream from other transport streams delivered by other delivery systems. An "original_network_id" indicates a network identifier of an original delivery system, which delivers services. A "transport_descriptor_length" field indicates the length of a descriptor following the "reserved_future_use" field, which is an undesignated field. This descriptor may be a descriptor B.

The descriptor B may include a descriptor describing NDN entry information. The NDN entry information will be described later.

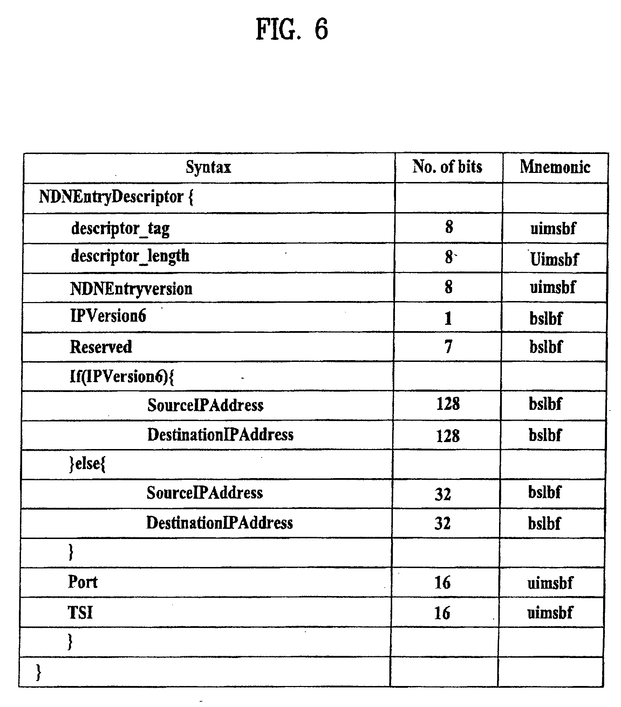

FIG. 6 illustrates a descriptor describing NDN entry information. This descriptor may be referred to as "NDNEntryDescriptor". This descriptor may be included in the descriptor field B of the above-illustrated NIT.

A "Descriptor_tag" field indicates an identifier identifying the associated descriptor. A "descriptor_length" field indicates the length of the descriptor in a unit of bytes. An "NDNEntryVersion" field indicates a version of NDN entry information. For example, the value of "NDNEntryVersion" field may be set to "1". When there is no compatibility among versions of entry information, the value of the "NDNEntryVersion" field as stated above is increased when there is a variation in version. The receiver can only decode NDN entry information corresponding to the "NDNEntryVersion" field.

An "IPVersion6" field indicates an IP version of address information following the "IPVersion6" field. For example, when the "IPVersion6" field has a value of "1 ", the values of "SourcelPAddress" and "DestinationIPAddress" fields are determined in accordance with an IPversion 6. On the other hand, the "IPVersion6" field has a value of "0", the values of "SourcelPAddress" and "DestinationIPAddress" fields are determined in accordance with an IPversion 4.

A "SourceIPAddress" and a "DestinationIPAddress" represent a source IP address and a destination IP address of an FLUTE session delivering an NDN message, respectively.

A "Port" field indicates a port number of the FLUTE session delivering the NDN message. A "TSI" field indicates a transport session identifier of the FLUTE session.

When NDN entry information is included in an NIT, as stated above, the receiver can acquire the NDN entry information from service description information, namely, the NIT, and thus can receive an NDN message from a session identified using the acquired entry information.

Hereinafter, an embodiment, in which a notification message is delivered, will be described. Notification messages may be delivered in accordance with the above-illustrated protocols. In the above description, an example, in which notification messages are delivered using an RTP and an FLUTE defined on a transport layer, has been described. The following description will be given in conjunction with an example in which a notification message is mapped on a transport layer, for a delivery thereof.

Information included in a notification message is related to a network supporting an Internet protocol datacasting (IPDC) system( for example a DVB network), an IP platform, or services described in a given ESG.

A format of a notification message will be described, prior to a description of mapping of a notification message on a transport layer.

A notification message includes a generic notification message part and a notification payload. The notification payload may include an application-specific notification message part and a media object.

When notification messages are mapped on a transport layer, they may be split in accordance with a target notification application and attributes (for example, size, time, synchronization constraints, etc.) such that the split messages thereof may be mapped on different transport protocols, respectively. Similarly, notification messages may be sorted in accordance with a target notification application and attributes such that they may be mapped on different transport protocols. In the case of notification messages deliverable without a time constraint, they may be mapped on an FLUTE. On the other hand, in the case of a notification messages deliverable with a time constraint associated with an audio or video stream, they may be mapped on an RTP.

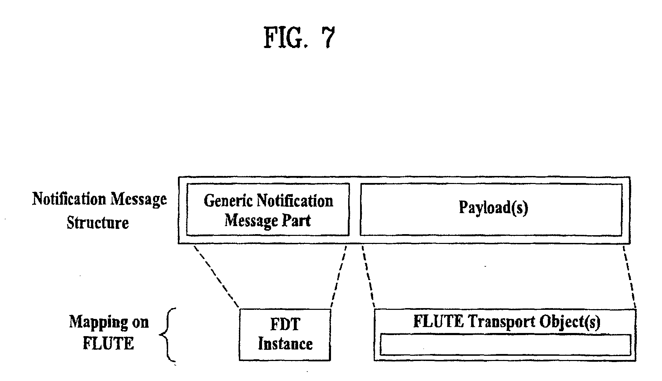

FIG. 7 is an embodiment in which a notification message is mapped on an FLUTE. In this case, the generic notification message of the notification message may be mapped on a file description table (FDT) instance of the FLUTE, whereas the payload of the notification message may be mapped on an FLUTE transport object of the FLUTE.

More than one notification message may be aggregated within a single transport object of an FLUTE, for an efficient delivery thereof.

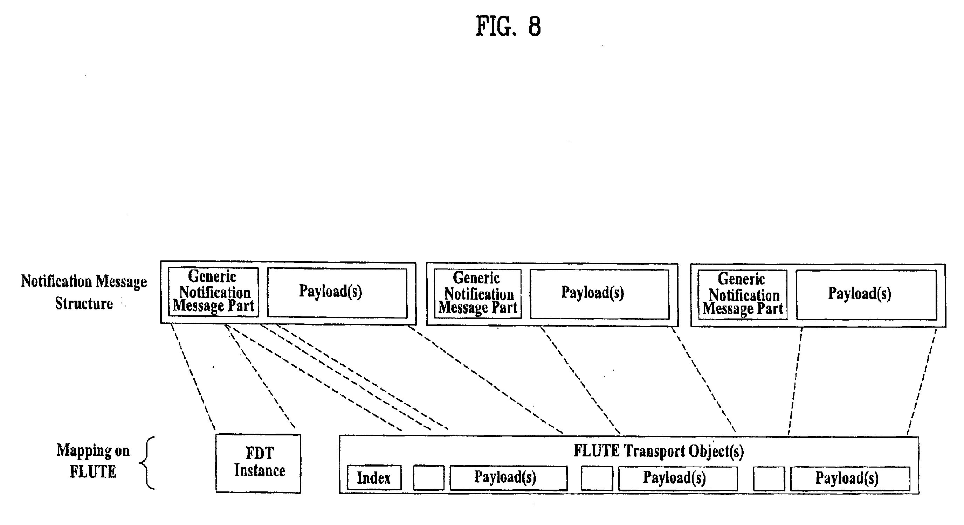

FIG. 8 illustrates an embodiment in which a plurality of notification messages is mapped on an FLUTE. Notification messages aggregated within a single transport object of an FLUTE are referred to as "notification aggregate", and the transport object is also referred to as a "FLUTE aggregate transport objet". Common portions of the generic notification message parts of the multiple notification messages may be mapped on the FDT instance of the FLUTE, whereas different portions of the generic notification message parts and the payloads of the multiple notification messages may be mapped on the FLUTE aggregate transport object of the FLUTE.

The FDT instance of the FLUTE may describe the notification aggregate carried in the FLUTE aggregate transport object, in an individual manner for each message. Alternatively, the common parts of all the mapped messages may be described in the FDT instance.

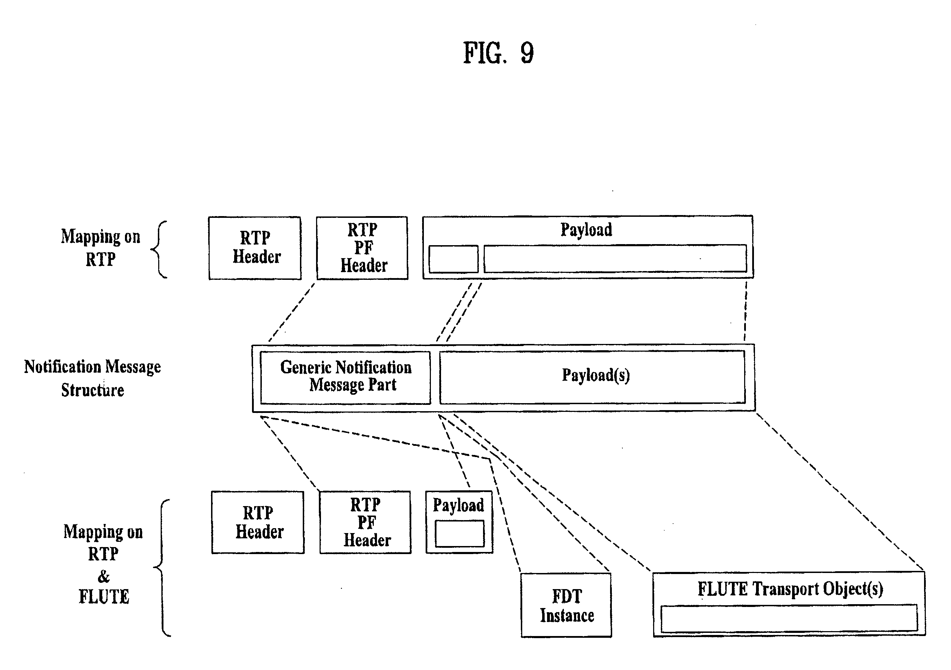

FIG. 9 illustrates an embodiment in which a notification message is mapped on an RTP or on an RTP and an FLUTE. As stated above, a notification message, which is delivered with a time constraint associated with an audio or video stream, may be mapped on an RTP. On the other hand, in the case of a notification message including a part to be delivered in synchronism with an audio/video stream, and the remaining part to be delivered without synchronization, the synchronizing message part may be mapped on an RTP, whereas the remaining massage part may be mapped on an FLUTE.

The upper portion of FIG. 9 illustrates an example in which a notification message is mapped on an RTP. In this case, the generic notification message part of the notification message may be mapped on an RTP payload format (PF) header and an RTP payload, and the payload of the notification message may be mapped on the remaining part of the RTP payload.

The lower portion of FIG. 9 illustrates an example in which a part of a notification message is mapped on an RTP, and the remaining part of the notification message is mapped on an FLUTE. In this case, the message mapping on the RTP is identical to the message mapping method illustrated in the upper portion of FIG. 9, and the message mapping on the FLUTE is identical to the message mapping method stated with reference to FIGs. 7 and 8.

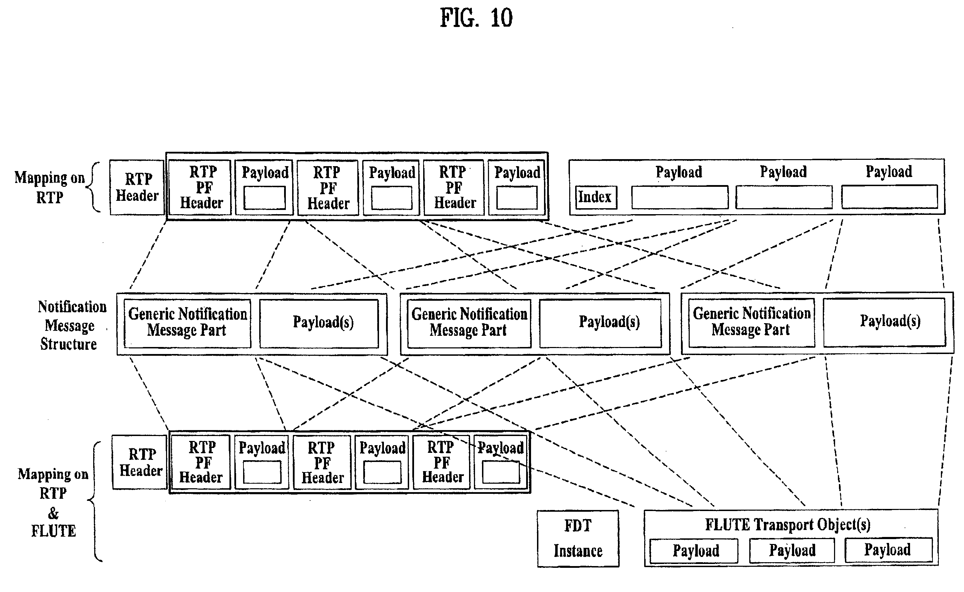

FIG. 10 illustrates an embodiment in which a plurality of notification messages is delivered. In this case, a plurality of notification messages may be aggregated within a single payload of an RTP, for an efficient delivery thereof.

Common portions of the generic notification message parts of the multiple notification messages may be mapped on an RTP PF header of the RTP, whereas the remaining parts of the multiple notification messages may be mapped on respective sections or an index part of an aggregate payload of the RTP. In this embodiment, each of the RTP PF headers may correspond to each of the multiple notification messages of the RTP payload. As illustrated in this figure, when the RTP packet includes a plurality of notification messages, the RTP PF header describing each of the notification messages is included in the RTP packet. For example, the RTP PF header may include description information, such as notification messages identifier, notification message version, notification message type and so on, for each of the plurality of notification messages. The detailed examples of this information will be described later.

On the other hand, when several notification messages are simultaneously delivered using an RTP and an FLUTE, the parts of the messages to be delivered with time constraints may be mapped on the aggregate payload of the RTP, and the remaining parts of the messages may be mapped on the aggregate transport object of the FLUTE. In this case, the common portions of the generic notification message parts of the aggregated notification messages may be mapped on the RTP PF header (for the parts with time constraints) and on the FDT instance (for the parts without a time constraint).

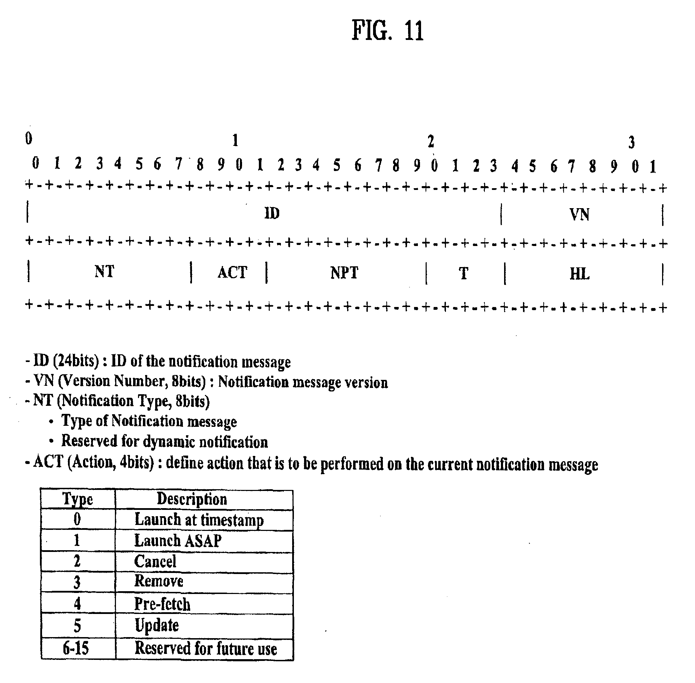

FIG. 11 illustrates an example of an RTP PF header. The RTP PF header may have the following format.

The RTP PF header may include an ID field, version number (VN) field, notification type (NT) field, action (ACT) field, notification payload type (NPT) field, type (T) field, and header length (HL) field. The size of each field shown in FIG. 11 is illustrative, so that it may have other values.

The ID field indicates an identifier of the associated notification message. The VN field indicates a version number of the notification message.

The NT field indicates a notification type. The ACT field defines an action to be performed for the currently-delivered notification message. Actions for notification messages will be described in detail later.

The ACT field of the RTP PF header may be a 4-bit field, and may have information as described in a table illustrated in a lower portion of FIG. 11. For example, when the ACT field has a value of "0", it represents information as to an action to launch the notification message at a timestamp of the RTP. When the ACT field has a value of "1", it represents information as to an action to launch the notification message as soon as possible. An ACT field value of "2" indicates an action to cancel the notification message. An ACT field value of "3" indicates a remove action. An ACT field value of "4" indicates a pre-fetch action. An ACT field value of "5" indicates an update action. When the ACT field has a value of "6", the action represented by the ACT field is determined in accordance with a definition of the RTP extension header. In this case, the RTP extension header may include a plurality of actions, and time information associated with each action. This will be described later.

The NT field indicates a notification type. For example, different values are set in the NT field according to the notification payload types such as emergency announcement, broadcasting schedule change, news and so on. The detailed value for each of the notification types may be specified by users who are supposed to transmit and receive the notification messages. The T field indicates an RTP packet type. These will be described later. The HL field indicates the length of the notification RTP PF header.

When a plurality of notification messages is mapped on an RTP (namely, when aggregated notification messages are carried in an RTP payload), the RTP PF header may describe the notification message identifier, the notification message version and the notification type, for each notification message. Accordingly, although different types of messages are included in one RTP packet, each of the messages can be identified and described.

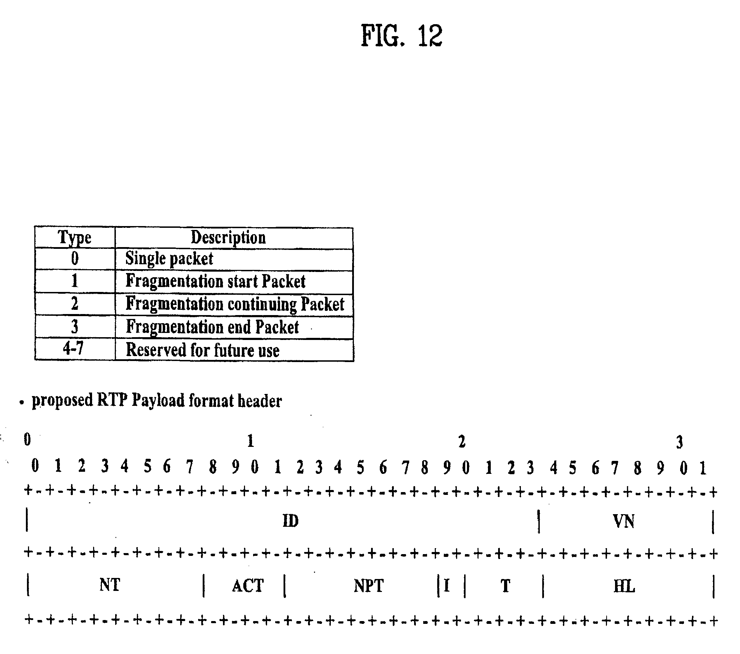

FIG. 12 is a diagram illustrating identification information representing that a plurality of notification messages is carried in an RTP payload. In an embodiment illustrated in FIG. 12, the RTP payload format (PF) header in the RTP packet may include, for each notification message, an identification (I) field as an identifier distinguishing a notification message from another notification message in the RTP payload. In this embodiment, the I field is assigned from the above-stated T field of the RTP PF header, for example, 1 bit is assigned for the I field in this embodiment.

The T field may represent the type of an RTP packet. For example, when the T field has a value of "0", it may represent that the RTP packet is a single packet. When the T field has a value of "1", it may represent that the RTP packet is a fragmentation start packet. When the T field has a value of "2", it may represent that the RTP packet includes a fragmentation continuing packet. On the other hand, when the T field has a value of "3", it may represent that the RTP packet is a fragmentation end packet. When the T field has other values, it is an undesignated field reserved for future use.

The value of the I field indicates whether or not there is another RTP PF header, namely, it means when the I field is set to indicate there are other notification messages in the RTP payload and distinction among the notification messages, the T field may be set to 3 bits.

When the RTP PF header includes the I field, the I field may be identification information respectively identifying the multiple notification messages in the RTP payload. The I field of this embodiment can represent whether there are multiple notification messages in the RTP payload. The I field is described in detail later.

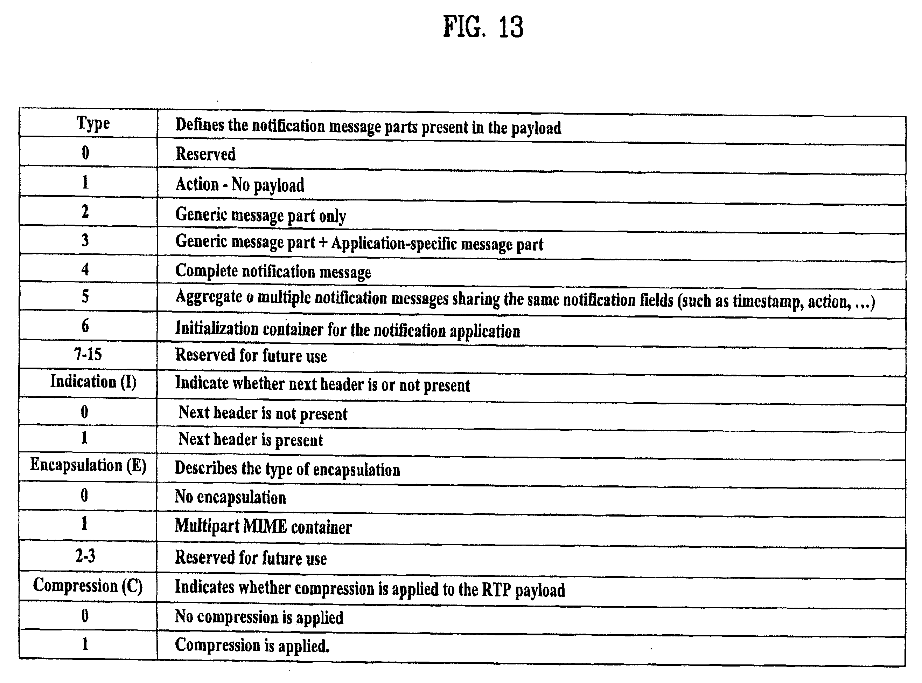

FIG. 13 is a diagram illustrating an identifier representing that the RTP payload carries a plurality of notification messages.

Referring to FIG. 13, a notification payload type (NPT) field defines the format of a notification payload. The NPT field may include a compression (C) field, encapsulation (E) field, indication (I) field, and a type field.

The type field defines notification messages present in an RTP payload.

When the type field has a value of "0", it indicates a reserved field. When the type field has a value of "1", it indicates a notification payload only including an action without a payload. When the type field has a value of "2", it indicates a notification payload only including a generic message part. When the type field has a value of "3", it indicates a notification payload including a generic message part and an application-specific message part. When the type field has a value of "4", it indicates a notification payload including a complete notification message. When the type field has a value of "5", it indicates a notification payload including aggregate multiple notification messages sharing the same notification field (for example, a time stamp, actions, etc.). When the type field has a value of "6", it indicates a notification payload including an initializing container for a notification application.

The I field represents information describing whether there is an additional RTP PF header for next message in the associated RTP packet. When the I field has a value of "0", it indicates that there is no RTP header for aggregate multiple notification messages. When the I field has a value of "1", it indicates that there is an additional RTP RF header for another notification message in this RTP payload. The RTP RF header includes information describing the corresponding notification message in detail. Therefore, it can be announced by the I field that there is an additional RTP PF header for another notification message in the RTP packet, and the detail description information of the notification message corresponding to the RTP PF header can be obtained from the RTP PF header.

The E field describes the type of encapsulation. For example, when the E field has a value of "1", it indicates an encapsulation type corresponding to a multipart MIME container.

The C field indicates whether the RTP payload is in a compressed state. For example, when the C field has a value of "0", it indicates that the RTP payload is not in a compressed state. On the other hand, when the C field has a value of "1", it indicates that the RTP payload is in a compressed state.

In accordance with the above-stated embodiment, it may be possible to map a plurality of notification messages on different transport protocols, namely, an RTP and an FLUTE, for an efficient delivery of the notification messages. In particular, when a plurality of notification messages is carried in an RTP payload, each of the RTP PF headers may include information describing each of the aggregate multiple notification messages carried in the RTP payload. The description information may include the message identifier, the message version, and the notification type for each of the aggregate multiple notification messages. Thus, when there is a plurality of notification messages, the description information for the each of the notification messages can be transmitted and received. In particular, a plurality of notification messages to be delivered with time constraints or in synchronism with audio/video streams, the RTP PF header may include information describing the messages in details.

When the type field of the NPT field has a value of "5", namely, when a plurality of notification messages is carried in the RTP payload, the associated identifier information may be set in the RTP PF header in accordance with various methods other than that of the above-stated method.

Hereinafter, an embodiment, in which transmission and reception of notification messages can be efficiently achieved, will be described. A notification message may be carried over a notification object, which may have multiple states. The notification object may have a life cycle depending on a variation in state.

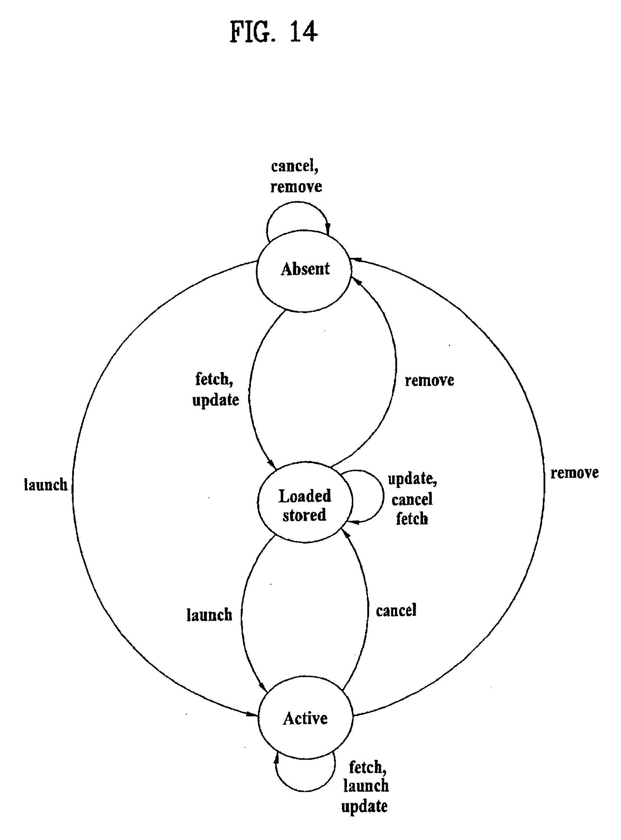

FIG. 14 illustrates a life cycle of a notification object. The illustrated notification object may have an absent state, loaded state, and active state. The state of the notification object may be varied in accordance with several actions.

A transition from an active or loaded state to an idle state may be possible not only through explicit actions, but may also happen spontaneously, so that the receiver may retrieve its initial state even under bad reception conditions, or when channel switch is made.

First, a fetch action for the notification object will be described.

When the notification object is fetched, the life time of the notification may be determined to have any possible value. The life time may have a relative time value from a fetch point to an automatic removal point, or may have an absolute time value until the notification disappears. Although accuracy is not critical, the notification provider may provide the notification while giving an enough margin. An intended active time may be determined, immediately after the fetching of the object. No fetch parameter may be given, using a launch action. However, if the launch action is regularly repeated during the active time, waste of bandwidth may occur. Explicit fetch or implicit fetch (when a launch action for a not-yet-loaded object is received) may be used.

Hereinafter, a launch action for a notification object will be described.

Once an object is launched, a maximum active time may be defined. Although a launch message (trigger) may be repeatedly delivered in order to cope with imperfect reception of a broadcast signal or late channel switch, it is unnecessary to repeatedly deliver the active time of the launch message for every delivery of the launch message (this is because the active time may be known from the fetch action). Accordingly, it is possible to save bandwidth. The active time delivery interval may be less than a second. The launch action may be immediately performed at a launch time indicated in a previous action, or when a launch time indicated in the launch action arrives. For this reason, the launch time may be determined in accordance with the result of a comparison thereof with a reference time. For example, the launch action may be performed, depending on a transport mechanism, e.g., when the presentation time of the RTP timestamp reaches the launch time.

Now, a cancel action for the notification object will be described.

The cancel action may be triggered through a specific notification message. Deactivation of a notification may be triggered by the expiration of a timer. For this reason, the cancel action may not carry a further parameter. This means that the life time of the notification will not be modified by the cancel action.

Hereinafter, a remove action of the notification object will be described. The remove action may be triggered through a specific notification message. In most cases, however, the object is removed after a given time. This means the end of the object life, so no parameter is further transmitted.

An update action for the notification object will now be described.

Although it may be useful to allow updating of life time or active time for existing objects, this is no essential requirement. Accordingly, the update action may be triggered directly by a special update command, or by the reception of modified parameters for the fetch and launch actions.

In accordance with the above-stated definition, the state of the notification object may transit among absent, loaded (stored), and active states.

For example, an object, which has been in an absent state, transits to an active state when it is launched, and transits to a loaded state when it is fetched (or updated). The object, which is in an absent state, maintains the absent state by a cancel or remove action.

An object, which is in an active state, transits to a loaded state by a cancel action, and transits to an absent state by a remove action. The object, which is in an active state, maintains the active state by a fetch, launch, or update action.

An object, which is in a loaded state, transits to an active state by a launch action, and transits to an absent state by a cancel action. The object, which is in a loaded state, maintains the loaded state by an update, cancel, or fetch action.

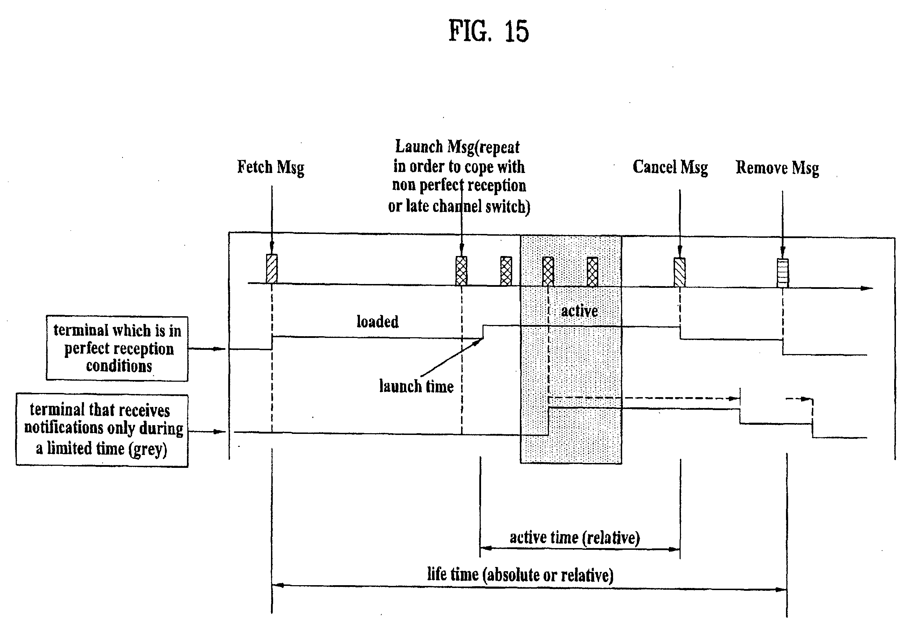

FIG. 15 is a diagram illustrating an example in which a notification is transmitted.

In FIG. 15, rectangular marks on the first line indicate a fetch action (fetch message Fetch Msg), a launch action (launch message Launch Msg), a cancel action (cancel message Cancel Msg), and a remove action (remove message Remove Msg) for a notification message, respectively.

The second line in FIG. 15 illustrates a state transition of the notification message where a receiver (terminal), which is in perfect reception conditions, receives the notification message. For example, when the receiver receives a fetch message, the event of the notification message transits to a loaded state. When a launch message is received, the event of the notification message is performed under the condition in which a certain margin is given. At this time, the notification message transits to an active state. The launch message may be repeatedly transmitted to cope with bad signal reception conditions or channel switch. The active time in this case is illustrated on the lowermost line in FIG. 15, as a relative time.

When a cancel action is performed for the notification message, the event of the notification message is cancelled, so that the notification message transits to a loaded state. When a remove action is performed, the notification message transits to an absent state, and the event of the notification message is unloaded.

The third line in FIG. 15 illustrates a state transition of the notification message where a receiver (terminal), which is in bad reception conditions, receives the notification message. When the receiver in bad reception conditions receives the notification message, the reception of the notification message is allowed only during a limited time (indicated by grey). When the receiver receives a launch message within the limited time, the notification message transits to an active state. Under bad signal reception conditions, the receiver maintains the notification message in the active state for a sufficient time, namely, a predetermined time. Thereafter, the notification message is deactivated. The deactivation may be triggered by a timer based on time information. The object is then unloaded.

The notification life time is indicated on the lowermost line, namely, last line.

As stated above, the delivery of the notification message may be achieved by transmitting a notification object. The notification message may be transferred together with several actions, in order to define actions of the notification object. The notification message may be delivered, using an FLUTE or RTP. Hereinafter, a notification, in which a plurality of actions is defined, will be described.

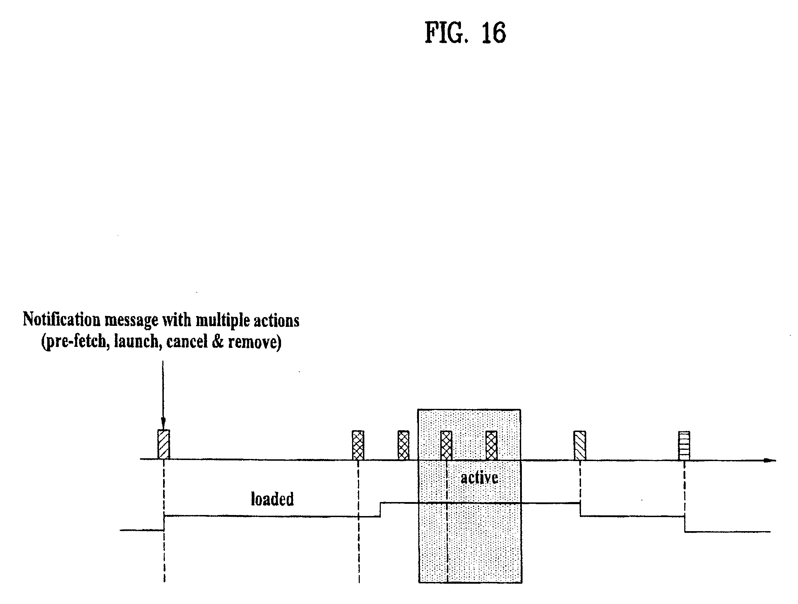

FIG. 16 is a diagram illustrating a state of a notification according to an action. In accordance with this embodiment, a notification message includes a plurality of actions, and information about times for which the actions are performed, respectively. The receiver may receive a notification message including information defining a plurality of actions, and may perform respective actions at associated times.

For example, the receiver receives a notification message including not only all actions, namely, fetch, launch, cancel, and remove actions, but also information about times at which respective actions should be performed.

When a fetch action is performed for the notification message at the associated time, the notification message transits to a loaded state, so that an event according to the notification message is loaded. When a launch action for the notification message is performed, the notification message transits to an active state, so that the event is performed. When a cancel action is performed at a time defined in a previously-received notification message, the current notification message transits to a loaded state, so that the event thereof is cancelled. Similarly, when a remove action is performed at remove time defined in the previously-received message, the event is unloaded, and the current notification message is also unloaded.

Thus, once a notification message is transmitted, it is unnecessary to repeatedly receive the notification message for respective actions. Accordingly, notification services can be provided even in bad signal reception conditions of the receiver or without repeated reception of the notification message by the receiver.

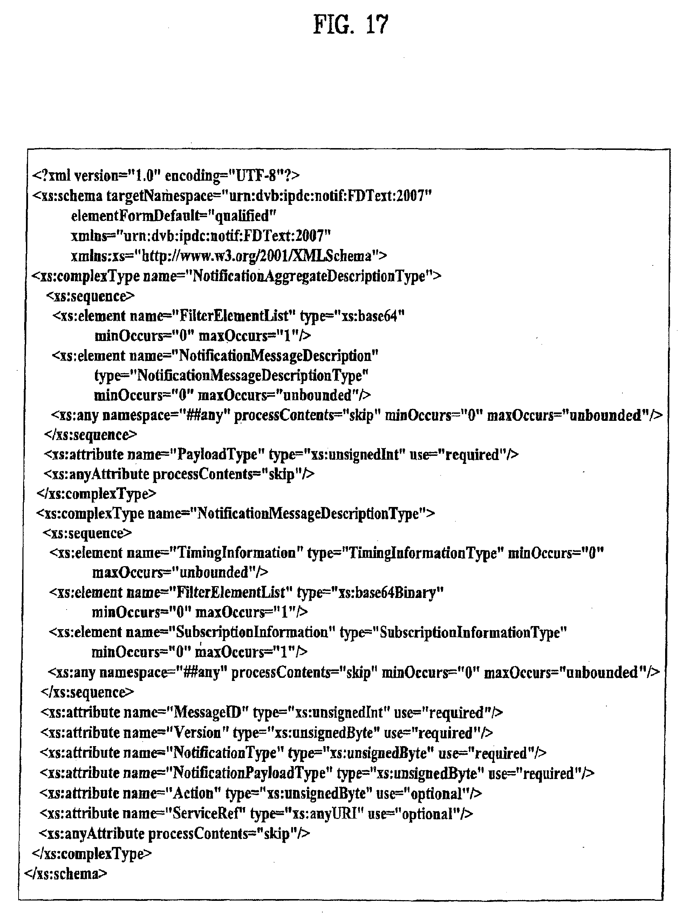

FIG. 17 is a diagram illustrating an example in which a notification message is described using an FLUTE. "NotificationAggregateDescriptionType" of an FDT implemented, for example, in an extensible markup language (XML) format, may describe a notification message.

In order to enable the FDT to describe the notification message, "NotificationAggregateDescriptionType" including a "FilterElementList" element and a "NotificationMessageDescription" element may be defined. The "FilterElementList" element may be used as a message filter by which a receiver filters a preferable notification message among notification messages equipped with the same notification type.

The "NotificationMessageDescription" element may be defined in accordance with "NotificationMessageDescriptionType" defined as a complex type. The "NotificationMessageDescriptionType" may include a "TimingInformation" element including information about a time at which the state of the notification message transits, a "FilterElementList" element indicating a filtering reference to determine whether a message carried in the transport object of an FLUTE is to be received, and a "SubscriptionInformation" element including service subscriber information.

The "Notification Message Description" element includes, attributes thereof, "Message ID" indicating the identifier of the message, "Version" indicating the version of the message, "NotificationType" indicating the notification type of the message, and "NotificationPayloadType" indicating the payload type of the message.

"Action" represents an action for the notification message, and "ServiceRef" represents reference information of services associated with the notification message.

As stated above, when a notification message, which includes actions causing a state transition of the message, and information about times at which respective actions are to be performed, is transmitted, frequent transmission of the notification message may cause transmission overhead. However, when information defining a plurality of actions for one event and information defining times at which the actions are to be performed, respectively, are transmitted as a single message, it is unnecessary to repeatedly receive the associated notification message.

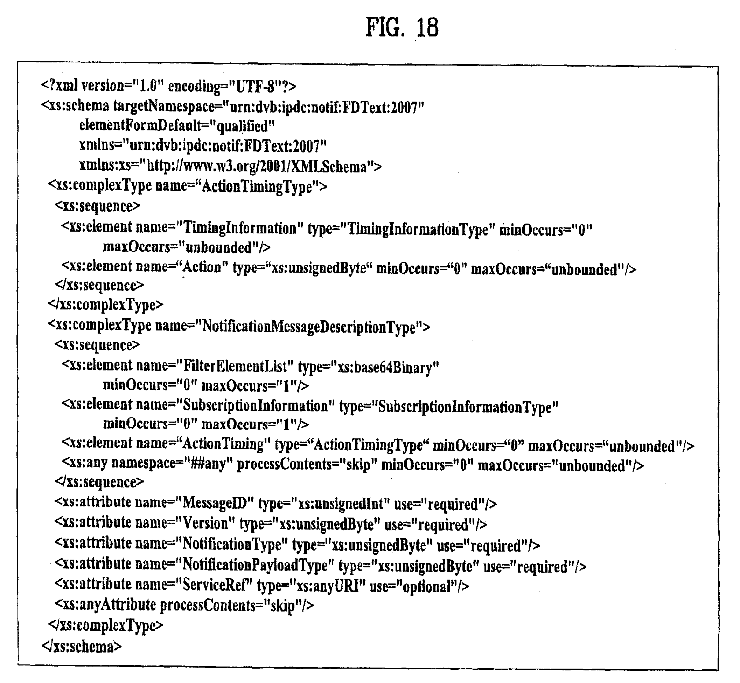

FIG. 18 illustrates "NotificationAggregateDescriptionType" describing a notification message including a plurality of actions and time information thereof. When a notification message is delivered, time information associated with actions causing a state transition of the notification message may be included in associated action attributes. The notification message description information "Notification Aggregate Description Type" of the illustrated FLUTE may include information defining a plurality of actions and information defining times at which the actions are to be performed, respectively.

The description type "NotificationAggregateDescriptionType" describing the format of the notification message may further include a plurality of "ActionTiming" elements, in addition to the above-stated elements. The "ActionTiming" elements may be defined in accordance with "ActionTimingType" as a type including a plurality of actions for the notification object and time information associated with each action.

The "ActionTimingType" may include a "Timing Information" element including time information, and an "Action" element including action information. Accordingly, when the illustrated notification object is received, the receiver may perform a state transition of the notification object in accordance with the action information and time information included in the notification object. When the notification message described in FIG. 18 is received, an event carried in the notification message may be performed or cancelled in accordance with the time information according to the "ActionTimingType" and the associated action information. Since the time information and action information may include a plurality of times and a plurality of actions, respectively, the transmission and reception of the notification message can be efficiently achieved without an increase in bandwidth.

A notification message, which includes information defining a plurality of actions for a notification and time information about times at which the actions are to be performed, respectively, may also be delivered using an RTP.

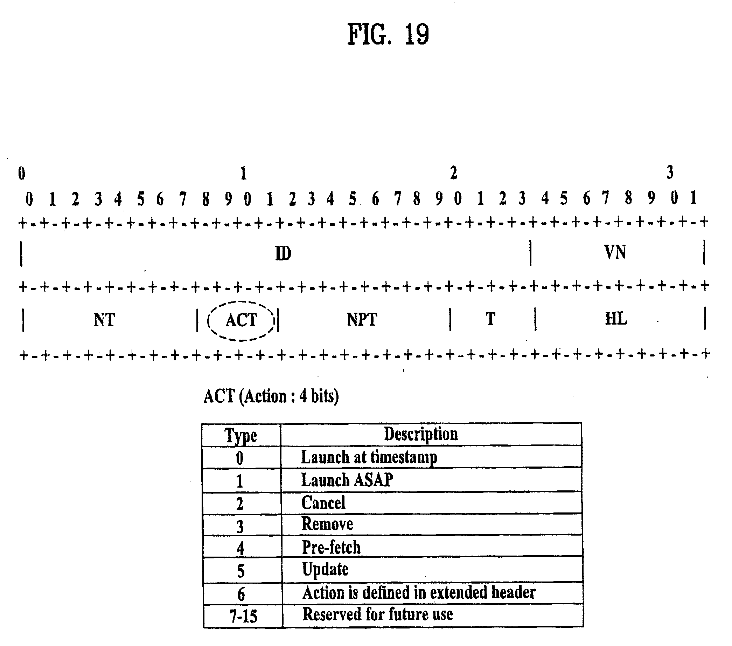

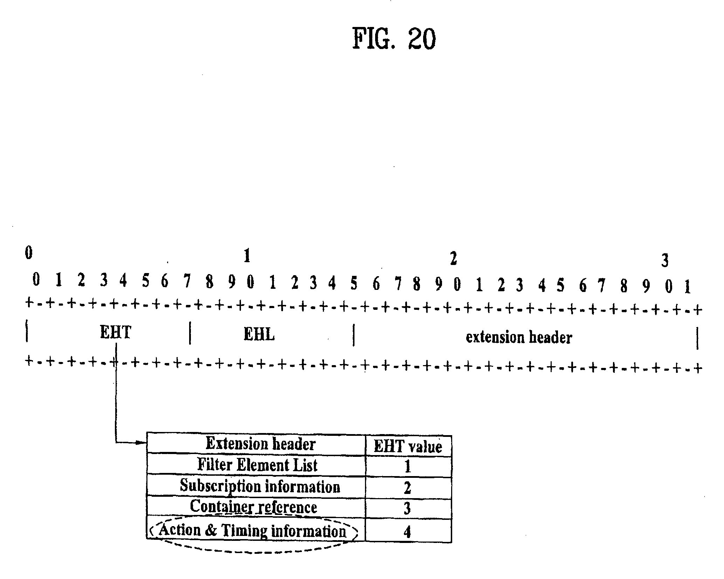

FIGs. 19 and 20 are diagrams illustrating notification information carried in an RTP when a notification message including multiple time information is delivered.

FIG. 19 is a diagram illustrating an RTP PF header. The RTP PF header may include an ID field, VN field, NT field, ACT field, NPT field, T field, and HL field. The size of each field shown in FIG. 19 is illustrative, so that it may have other values. For the description of each field, the above description may be referred to.

However, the ACT field of the RTP PF header will be described in detail. The ACT field, which is a 4-bit field, may have information as described in a table illustrated in a lower portion of FIG. 19. For example, when the ACT field has a value of "0", it represents information as to an action to launch the notification message at a timestamp of the RTP. When the ACT field has a value of "1 ", it represents information as to an action to launch the notification message as soon as possible. An ACT field value of "2" indicates an action to cancel the notification message. An ACT field value of "3" indicates a remove action. An ACT field value of "4" indicates a pre-fetch action. An ACT field value of "5" indicates an update action. When the ACT field has a value of "6", the action represented by the ACT field is determined in accordance with a definition of the RTP extension header. In this case, the RTP extension header may include a plurality of actions, and time information associated with each action.

FIG. 20 is a diagram illustrating an RTP payload extension header. The RTP payload extension header may include an extension header type (EHT) field, an extension header length (EHL) field, and an extension header field.

When the EHT field has a value of "1", the extension header indicates a filter element list. The filter element list represents filtering information for a notification message. In accordance with the filtering information, filtering and aggregation may be performed for the notification message.

When the EHT field has a value of "2", the extension header indicates service subscriber information, namely, subscription information. When the EHT field has a value of "3", the extension header indicates a container reference.

On the other hand, when the EHT field has a value of "4", the extension header indicates a plurality of actions and time information associated with each action.

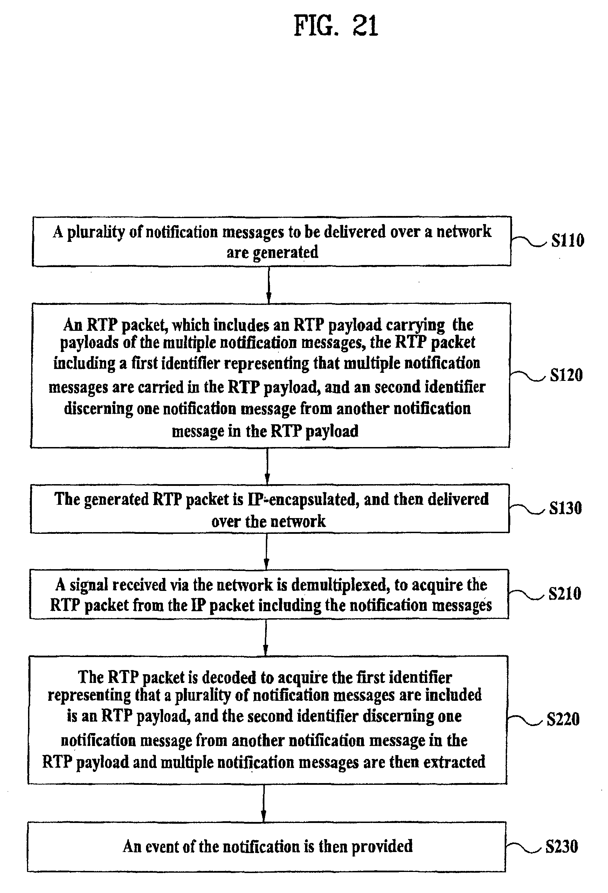

FIG. 21 is a flowchart illustrating an embodiment of the above-stated notification message transmitting/receiving method.

A plurality of notification messages to be delivered over a network are generated (S110). Each notification message may include a generic notification message part and a notification message payload.

An RTP packet, which includes an RTP payload carrying the payloads of the multiple notification messages, (S120). At this time, the RTP packet includes information describing the notification messages in details in the RTP payload. The information of describing the notification messages may includes the notification type of each of the notification messages...

Meanwhile, when it is unnecessary to deliver the multiple notification messages in synchronism with media objects thereof, an FLUTE FDT and an FLUTE transport object may be generated to deliver the notification messages in accordance with an FLUTE. Alternatively, the notification messages may be transformed in transport formats according to different transport protocols, namely, RTP and FLUTE, so that a part of the notification messages are delivered using an RTP packet, and the remaining part of the notification messages are delivered using an FLUTE.

The generated RTP packet is IP-encapsulated, and then delivered over the network (S130). When the notification messages are delivered using the FLUTE, the FLUTE is also IP-encapsulated. In this case, each encapsulated unit may be modulated such that it can be delivered over the network.

Each notification message may be delivered in accordance with information defining a plurality of actions and time information associated with each action. When each notification message may be delivered in accordance with information defining a plurality of actions and time information associated with each action, the action information and time information may be set in the FDT of the FLUTE or the RTP PF header and extension header of the RTP. In this case, the notification message can be delivered without repeated delivery thereof for different actions because times, at which the notification message is to be loaded, activated, cancelled, and removed, respectively, are set in the FLUTE or RTP.

For reception of the delivered notification messages, a signal received via the network is demultiplexed, to acquire the RTP packet from the IP packet including the notification messages (S210).

The notification messages may be discovered, based on notification announcement information. When a notification message carried in a broadcast signal is received, the announcement information as to the notification message may be discovered from service description information describing the associated network. Alternatively, an IP packet transmitted to a specific IP address is identified from the service description information. In this case, it is possible to acquire the bootstrap information of an ESG from the identified IP packet, and then to acquire the announcement information from the bootstrap information. Otherwise, it may be possible to acquire the announcement information as to the notification message through a channel discovered from the acquired bootstrap information as a channel, from which the ESG can be acquired, or through a specific service of the ESG received from the associated bootstrap.

Thereafter, the RTP packet is decoded to acquire information describing each of a plurality of notification messages, when there is the plurality of notification messages in the payload of the RTP packet. The multiple notification messages are then extracted from the RTP payload using the acquired information. Thus, the notification messages are acquired (S220).

Meanwhile, when the multiple notification messages are not required to be synchronized with media objects, they may be acquired from an FLUTE carrying them. Otherwise, a part of the notification messages may be acquired from an RTP packet, and the remaining part of the notification messages may be acquired from an FLUTE.

The notification messages are parsed. And, in accordance with the action information of each notification message, an event of the notification is then provided (S230).

Each notification message may include information defining a plurality of actions and time information associated with each action. When each notification message may include information defining a plurality of actions and time information associated with each action, the action information and time information may be acquired from the FDT of the FLUTE or the RTP PF header and extension header of the RTP. In this case, it is possible to acquire events provided in accordance with the actions and associated times defined in the received notification message, without repeated reception of the notification message.

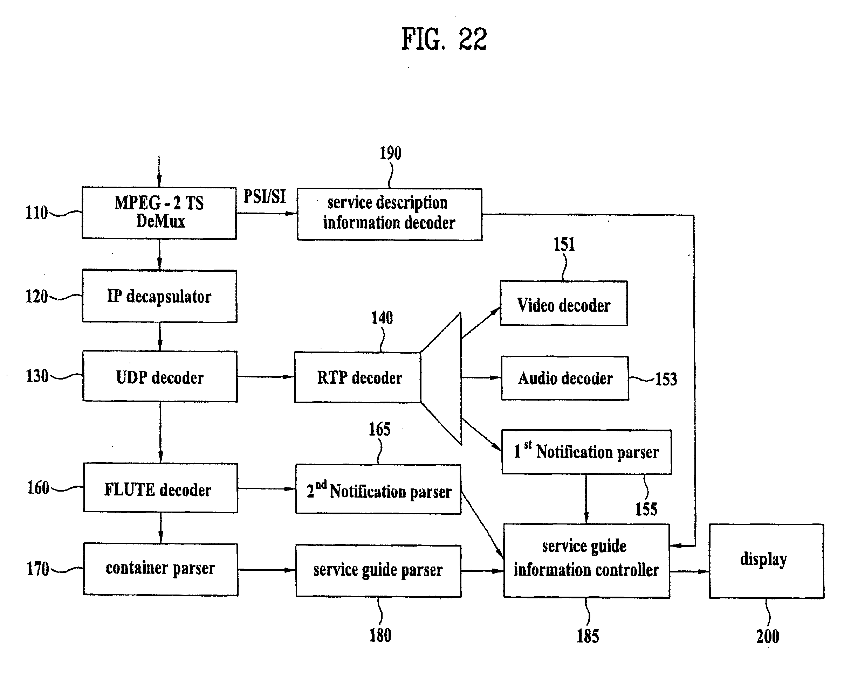

FIG. 22 is a block diagram illustrating an embodiment of a notification message receiving apparatus. The notification message receiving apparatus in the illustrated embodiment includes a transport stream demultiplexer 110, and IP decapsulator 120, a UDP decoder 130, an RTP decoder 140, a video decoder 151, an audio decoder 153, a first notification parser 155, an FLUTE decoder 160, a second notification parser 165, a container parser 170, a service guide parser 180, a service guide information controller 185, a service description information decoder 190, and a display 200.

The notification message receiving apparatus may be connected to a signal receiver for receiving a signal carrying a notification message over a network. For example, when a broadcast signal from a DVB system is received over a broadcasting network, the signal receiver may be a DVB signal receiver. Where a signal is received over an interaction network, the notification message receiving apparatus may be connected to a communication device capable of performing signal modulation and demodulation.

The transport stream demultiplexer 110 may demultiplex an IP packet included in a transport stream. When the notification message receiving apparatus is connected to a communication device, the transport stream demultiplexer 110 may be dispensed with.

The IP decapsulator 120 decapsulates the demultiplexed IP packet, to remove an IP header including source and destination IP addresses.

The UDP decoder 130 outputs data obtained after removing a UDP header including source and destination ports from a payload decapsulated by the IP decapsulator 120.

The RTP decoder 140 may output encoded data by controlling an encoding rate in accordance with an RTP control protocol (RTCP). The encoded data may be content data including at least one of video data, audio data, and a notification message. The RTP decoder 140 may decode the information describing each of the notification messages in the RTP payload. For example, the RTP decoder 140 may decode description information for the notification types of the notification messages in the RTP payload.

The video decoder 151 may decode video data output from the RTP decoder 140, to output the decoded video data. For example, the video decoder 151 may decode video data encoded in an H.264 format. The audio decoder 153 may decode audio data output from the RTP decoder 140, to output the decoded audio data. For example, the audio decoder 153 may decode audio data encoded in an AAC+ format.

The first notification parser 155 parses a notification message delivered using an RTP, to output the parsed notification message. The display 200 may provide the notification message output from the first notification parser 155 to the user. The NDN message and PDN message parsed by the first notification parser 155 can be provided to the user through the display 200.

Meanwhile, the FLUTE decoder 160 decodes an FDT of the data output from the UDP decoder 130, to output files included in the transport object of an FLUTE. The transport object may output files of binary data, image data, text data, etc. The FLUTE decoder 160 may output the notification message included in the transport object of the FLUTE.

The second notification parser 165 parses the notification message delivered using an FLUTE, to output the parsed notification message.

The first notification parser 155 and second notification parser 165 may be incorporated to constitute a single parser.

Meanwhile, the container parser 170 may parse a container included in the transport object of the FLUTE, to output service guide information.

The service guide parser 180 parses the service guide information output from the container parser 170, to output the parsed service guide information.

The service guide information controller 185 may receive the service guide information output from the service guide parser 180, and the notification messages respectively output from the first and second notification parsers 155 and 165, to output the received information and messages to the display 200.

The service guide information controller 185 may provide service guide information from the service guide parser 180 and a notification message from the notification parser 165 to the user through the display 200.

The service description information decoder 190 may decode the service description information demultiplexed by the transport stream demultiplexer 110. For example, the service description information decoder 190 may decode service description information including announcement information as to notification messages (for example, PSI/SI information such as PAT, PMT, or NIT). The service description information decoder 190 may decode announcement information as to notification messages included in an NIT, to allow reception of a notification message identified based on the decoded announcement information.

When a plurality of notification messages is delivered via an RTP, the RTP decoder 140 may decode information included in an RTP packet to describe the plurality of notification messages in details. In accordance with the information, the first notification parser 155 may identify and parse each of the multiple notification messages included in the RTP payload.

When a notification message is delivered using an RTP, the RTP decoder 140 may decode the RTP packet. In accordance with the decoded infonnation, the first notification parser 155 may output the notification message, which is included in an RTP payload of the RTP, based on the actions and time information included in the RTP payload format header.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A notification message receiving apparatus comprising:
a real-time protocol (RTP) decoder (140) configured:
- to decode a single RTP packet; and
- to acquire, from the RTP packet, data of a plurality of notification messages which are delivered with time constraints associated with audio or video streams; and
a file delivery over unidirectional transport (FLUTE) decoder (150) configured:
- to decode a file description table (FDT) instance and FLUTE transport object in accordance with FLUTE; and
- to acquire data of the plurality of notification messages which are delivered without time constraints,
**characterized in that** the RTP packet includes first information describing a notification type of each of the plurality of notification messages and second information indicating that the plurality of notification messages is aggregated within the RTP packet, and
generic notification message parts of the plurality of notification messages are included in an RTP payload format header in the RTP packet and remaining parts of the plurality of notification messages are included in a payload in the RTP packet.

2. The notification message receiving apparatus according to claim 1, wherein the RTP payload format header includes a messages identifier, a notification message version and a notification message type for each of the plurality of notification messages

3. The notification message receiving apparatus according to claim 1, wherein generic notification message parts of the notification messages carried in accordance with the FLUTE are mapped on a file description table (FDT) instance of the FLUTE and remaining parts of the notification messages are mapped to a FLUTE transport object of the FLUTE.

4. The notification message receiving apparatus according to claim 1, wherein the second information is in the RTP payload format header of the RTP packet.

5. The notification message receiving apparatus according to claim 1, further comprising:
a user datagram protocol (UDP) decoder (130) configured:
- to decode an UDP packet decapsulated from an Internet protocol (IP) in accordance with an UDP; and
- to output the RTP packet and data in accordance with FLUTE.

6. The notification message receiving apparatus according to claim 1, further comprising:
a first notification parser (155) configured to parse the plurality of notification messages.

7. A notification message receiving method comprising:
decoding a single real-time protocol (RTP) packet; and acquiring from the RTP packet, data of a plurality of notification messages which are delivered with time constraints associated with audio or video streams; and decoding a file description table (FDT) instance and FLUTE transport object in accordance with FLUTE; and acquiring data of the plurality of notification messages which are delivered without time constraints associated with audio or video streams,
**characterized in that** the RTP packet includes first information describing a notification type of each of the plurality of notification messages and second information indicating that the plurality of notification messages is aggregated within the RTP packet, and
generic notification message parts of the plurality of notification messages are included in an RTP payload format header in the RTP packet and remaining parts of the plurality of notification messages are included in a payload in the RTP packet.

8. The notification message receiving method according to claim 7, wherein the RTP payload format header includes a messages identifier, a notification message version and a notification message type for each of the plurality of notification messages

9. The notification message receiving method according to claim 7, wherein generic notification message parts of the notification messages carried in accordance with the FLUTE are mapped on a file description table (FDT) instance of the FLUTE and remaining parts of the notification messages are mapped on a FLUTE transport object of the FLUTE.

10. The notification message receiving method according to claim 7, wherein the second information is in the RTP payload format header of the RTP packet.

11. The notification message receiving method according to claim 7, further comprising:
decoding an UDP packet decapsulated from an Internet protocol (IP) in accordance with an UDP; and outputting the RTP packet and data in accordance with FLUTE.

12. The notification message receiving method according to claim 7, further comprising:
parsing the plurality of notification messages.

## Patentansprüche

1. Mitteilungsbenachrichtigungsempfangsvorrichtung, die aufweist:
einen Echtzeitprotokoll- (RTP-) Decoder (140), der konfiguriert ist:
- um ein einzelnes RTP-Paket zu decodieren; und
- um aus dem RTP-Paket Daten einer Vielzahl von Mitteilungsbenachrichtigungen zu erfassen, welche unter zeitlichen Randbedingungen zugestellt werden, die mit Audio- oder Videoströmen verbunden sind; und
einen Decoder (150) für die Dateizustellung über unidirektionalen Transport (FLUTE: file delivery over unidirectional transport), der konfiguriert ist:
- um eine Instanz einer Dateibeschreibungstabelle (FDT) und ein FLUTE-Transportobjekt gemäß FLUTE zu decodieren; und
- um Daten der Vielzahl von Mitteilungsbenachrichtigungen, die ohne zeitliche Randbedingungen zugestellt werden, zu erfassen,
**dadurch gekennzeichnet, dass** das RTP-Paket eine erste Information, die einen Mitteilungstyp jeder der Vielzahl von Mitteilungsbenachrichtigungen beschreibt, und eine zweite Information umfasst, die anzeigt, dass die Vielzahl von Mitteilungsbenachrichtigungen innerhalb der Nutzlast in dem RTP-Paket vereinigt sind, und
generische Mitteilungsbenachrichtigungsteile der Vielzahl von Mitteilungsbenachrichtigungen in einem RTP-Nutzlastformat-Anfangsblock des RTP-Pakets enthalten sind und restliche Teile der Vielzahl von Mitteilungsbenachrichtigungen in der Nutzlast in dem RTP-Paket enthalten sind.

2. Mitteilungsbenachrichtigungsempfangsvorrichtung nach Anspruch 1, wobei der RTP-Nutzlastformat-Anfangsblock eine Nachrichtenkennung, eine Mitteilungsbenachrichtigungsversion und einen Mitteilungsbenachrichtigungstyp für jede der Vielzahl von Mitteilungsbenachrichtigungen aufweist.

3. Mitteilungsbenachrichtigungsempfangsvorrichtung nach Anspruch 1, wobei die gemäß FLUTE beförderten generischen Mitteilungsbenachrichtigungsteile der Mitteilungsbenachrichtigungen auf eine Instanz einer Dateibeschreibungstabelle (FDT) des FLUTE abgebildet werden und restliche Teile der Mitteilungsbenachrichtigungen auf ein FLUTE-Transportobjekt des FLUTE abgebildet werden.

4. Mitteilungsbenachrichtigungsempfangsvorrichtung nach Anspruch 1, wobei die zweite Information in dem RTP-Nutzlast-Anfangsblock des RTP-Pakets ist.

5. Mitteilungsbenachrichtigungsempfangsvorrichtung nach Anspruch 1, die ferner aufweist:
einen Benutzerdatagramm- (UDP-) Decoder (130), der konfiguriert ist:
- um ein aus einem Internetprotokoll (IP) entkapseltes Paket gemäß einem UDP zu decodieren; und
- um das RTP-Paket und Daten gemäß FLUTE auszugeben.

6. Mitteilungsbenachrichtigungsempfangsvorrichtung nach Anspruch 1, die ferner aufweist:
einen ersten Mitteilungsparser (155), der konfiguriert ist, um die Vielzahl von Mitteilungsbenachrichtigungen zu parsen.

7. Mitteilungsbenachrichtigungsempfangsverfahren, das aufweist:
Decodieren eines einzelnen Echtzeitprotokoll- (RTP-) Pakets; und Erfassen von Daten einer Vielzahl von Mitteilungsbenachrichtigungen aus dem RTP-Paket, welche unter zeitlichen Randbedingungen zugestellt werden, die mit Audio- oder Videoströmen verbunden sind; und Decodieren einer Instanz einer Dateibeschreibungstabelle (FDT) und eines FLUTE-Transportobjekts gemäß FLUTE; und Erfassen von Daten der Vielzahl von Mitteilungsbenachrichtigungen, die ohne zeitliche Randbedingungen, die mit Audio- oder Videoströmen verbunden sind, zugestellt werden,
**dadurch gekennzeichnet, dass** das RTP-Paket eine erste Information, die einen Mitteilungstyp jeder der Vielzahl von Mitteilungsbenachrichtigungen beschreibt, und eine zweite Information umfasst, die anzeigt, dass die Vielzahl von Mitteilungsbenachrichtigungen innerhalb der Nutzlast in dem RTP-Paket vereinigt sind, und
generische Mitteilungsbenachrichtigungsteile der Vielzahl von Mitteilungsbenachrichtigungen in einem RTP-Nutzlastformat-Anfangsblock des RTP-Pakets enthalten sind und restliche Teile der Vielzahl von Mitteilungsbenachrichtigungen in der Nutzlast in dem RTP-Paket enthalten sind.

8. Mitteilungsbenachrichtigungsempfangsverfahren nach Anspruch 7, wobei der RTP-Nutzlastformat-Anfangsblock eine Nachrichtenkennung, eine Mitteilungsbenachrichtigungsversion und einen Mitteilungsbenachrichtigungstyp für jede der Vielzahl von Mitteilungsbenachrichtigungen aufweist.

9. Mitteilungsbenachrichtigungsempfangsverfahren nach Anspruch 7, wobei die gemäß FLUTE beförderten generischen Mitteilungsbenachrichtigungsteile der Mitteilungsbenachrichtigungen auf eine Instanz einer Dateibeschreibungstabelle (FDT) des FLUTE abgebildet werden und restliche Teile der Mitteilungsbenachrichtigungen auf ein FLUTE-Transportobjekt des FLUTE abgebildet werden.

10. Mitteilungsbenachrichtigungsempfangsverfahren nach Anspruch 7, wobei die zweite Information in dem RTP-Nutzlast-Anfangsblock des RTP-Pakets ist.

11. Mitteilungsbenachrichtigungsempfangsverfahren nach Anspruch 7, das ferner aufweist:
Decodieren eines aus einem Internetprotokoll (IP) entkapselten UDP-Pakets gemäß einem UDP; und Ausgeben des RTP-Pakets und von Daten gemäß FLUTE.

12. Mitteilungsbenachrichtigungsempfangsverfahren nach Anspruch 7, das ferner aufweist:
Parsen der Vielzahl von Mitteilungsbenachrichtigungen.

## Revendications

1. Appareil de réception de message de notification comprenant :
un décodeur de protocole en temps réel (RTP) (140) configuré :
- pour décoder un seul paquet RTP ; et
- pour acquérir, du paquet RTP, des données d'une pluralité de messages de notification qui sont livrés avec des contraintes de temps associées à des flux audio ou vidéo ; et
un décodeur de livraison de fichier sur transport unidirectionnel (FLUTE) (150) configuré :
- pour décoder une instance de tableau de description de fichier (FDT) et un objet de transport FLUTE en fonction d'une FLUTE ; et
- pour acquérir des données de la pluralité de messages de notification qui sont livrés sans contraintes de temps,
**caractérisé en ce que** le paquet RTP comprend une première information décrivant un type de notification de chacun de la pluralité de messages de notification et une deuxième information indiquant que la pluralité de messages de notification est agrégée dans le paquet RTP, et
les parties génériques de message de notification de la pluralité de messages de notification sont comprises dans un en-tête de format de charge utile RTP du paquet RTP et les parties restantes de la pluralité de messages de notification sont comprises dans une charge utile du paquet RTP.

2. Appareil de réception de message de notification selon la revendication 1, dans lequel l'en-tête de format de charge utile RTP comprend un identifiant de messages, une version de message de notification et un type de message de notification pour chacun de la pluralité de messages de notification.

3. Appareil de réception de message de notification selon la revendication 1, dans lequel les parties génériques de message de notification des messages de notification transportés en fonction de la FLUTE sont mises en correspondance dans une instance de tableau de description de fichier (FDT) de la FLUTE et les parties restantes des messages de notification sont mises en correspondance avec un objet de transport FLUTE de la FLUTE.

4. Appareil de réception de message de notification selon la revendication 1, dans lequel la deuxième information est dans l'en-tête de format de charge utile RTP du paquet RTP.

5. Appareil de réception de message de notification selon la revendication 1, comprenant en outre :
un décodeur de protocole de datagrammes d'utilisateur (UDP) (130) configuré :
- pour décoder un paquet UDP décapsulé à partir d'un protocole Internet (IP) en fonction d'un UDP ; et
- pour transmettre le paquet RTP et les données en fonction de la FLUTE.

6. Appareil de réception de message de notification selon la revendication 1, comprenant en outre :
un premier analyseur syntaxique de notification (155) configuré pour effectuer l'analyse syntaxique de messages de notification.

7. Procédé de réception de message de notification comprenant :
le décodage d'un seul paquet de protocole en temps réel (RTP) ; et l'acquisition, du paquet RTP, de données d'une pluralité de messages de notification qui sont livrés avec des contraintes de temps associées à des flux audio ou vidéo ; et le décodage d'une instance de tableau de description de fichier (FDT) et d'un objet de transport FLUTE en fonction de la FLUTE ; et l'acquisition de données de la pluralité de messages de notification qui sont livrés sans contraintes de temps associées à des flux audio ou vidéo,
**caractérisé en ce que** le paquet RTP comprend une première information décrivant un type de notification de chacun de la pluralité de messages de notification et une deuxième information indiquant que la pluralité de messages de notification est agrégée dans le paquet RTP, et
les parties génériques de message de notification de la pluralité de messages de notification sont comprises dans un en-tête de format de charge utile RTP du paquet RTP et les parties restantes de la pluralité de messages de notification sont comprises dans la charge utile du paquet RTP.

8. Procédé de réception de message de notification selon la revendication 7, dans lequel l'en-tête de format de charge utile RTP comprend un identifiant de messages, une version de message de notification et un type de message de notification pour chacun de la pluralité de messages de notification.

9. Procédé de réception de message de notification selon la revendication 7, dans lequel les parties génériques de message de notification des messages de notification transportés en fonction de la FLUTE sont mises en correspondance dans une instance de tableau de description de fichier (FDT) de la FLUTE et les parties restantes des messages de notification sont mises en correspondance dans un objet de transport FLUTE de la FLUTE.

10. Procédé de réception de message de notification selon la revendication 7, dans lequel la deuxième information est dans l'en-tête de format de charge utile RTP du paquet RTP.

11. Procédé de réception de message de notification selon la revendication 7, comprenant en outre :
le décodage d'un paquet UDP décapsulé à partir d'un protocole Internet (IP) en fonction d'un UDP ; et la transmission du paquet RTP et des données en fonction de la FLUTE.

12. Procédé de réception de message de notification selon la revendication 7, comprenant en outre :
l'analyse syntaxique de la pluralité de messages de notification.
